# EUROPÄISCHE PATENTSCHRIFT

(11) **EP 0 259 633 B1**
(45) Veröffentlichungstag und Bekanntmachung des Hinweises auf die Patenterteilung: **15.03.1995**
(21) Anmeldenummer: 87111605.9
(22) Anmeldetag: 11.08.1987
(51) Int. Cl.: A01C 15/16, A01C 7/12

(54) **Vorrichtung zum vereinzelten bzw. volumetrischen Ausbringen von granulatförmigen Materialien aus Granulatstreuern**
Apparatus for the scattered or volumetric dispensing of granulated produce from a spreader
Dispositif de dosage de précision, par exemple volumétriques, de matériaux en granulés dans des épandeurs de granulés

(30) Priorität: 18.04.1987 DE 3713250; 06.09.1986 DE 3630425
(43) Veröffentlichungstag der Anmeldung: 16.03.1988
(73) Patentinhaber: Hendlmeier, Konrad, D-93107 Thalmassing (DE)
(72) Erfinder: Hendlmeier, Konrad, D-93107 Thalmassing (DE)
(74) Vertreter: Wasmeier, Alfons, Dipl.-Ing.

(56) Entgegenhaltungen:
- EP-A- 150 243
- DE-A- 2 029 054
- DE-C- 265 651
- FR-A- 845 865
- FR-A- 2 058 753
- FR-A- 2 274 899
- FR-A- 2 289 104
- FR-A- 2 296 994
- FR-A- 2 591 416
- WO 85/00345

## Beschreibung

Die Erfindung beztrifft eine Vorrichtung nach dem Oberbegriff des Anspruches 1.

Eine derartige Vorrichtung ist aus der FR-PS 22 74 899 bekannt, bei der die Abstreifervorrichtung eine in Umfangsrichtung des Zellenrades angeordnete gekrümmte Abstreiferplatte aufweist, die in Umfangsrichtung verstellbar ist, derart, daß die im Abstand voneinander angeordneten Zellenreihen durch die Abstreiferplatte mehr oder weniger überdeckt werden und damit festgelegt wird, wieviel Granulat in die Zellenräder gelangt, so daß hierdurch eine Dosierung erreicht wird. Diese Entgegenhaltung ist ausschließlich auf die mechanische Steuerung der Dosierung gerichtet und es ist weder ein Nachstellen der Abstreiferplatte in radialer Richtung noch eine positive Einflußnahme auf die Abführung des vom Zellenrad abgegebenen Granulats entnehmbar.

Bei der Sämaschine nach EP-A- 0 150 243 wird das Saatgut aus einem Vorratsbehälter Dosierrädern frei zugeführt, von den Dosierrädern in einen Pufferspeicher mitgenommen, in der Bewegungsrichtung umgekehrt und in Blasrohre abgegeben. In die Blasrohre wird Druckluft zum Abführen des Saatgutes eingeblasen. Eine derartige Vorrichtung weist weder eine Abstreifervorrichtung noch einen unmittelbaren Übergang des zu verteilenden Gutes von den Dosierrädern in die Verteilerrohre noch einen Beschleunigungseffekt des Saatgutes in der Abgabeleitung noch eine Anordnung, bei der die Freiräume zur Führung des Granulats gleichzeitig die Luftführungen sind, auf.

Die FR-A- 25 91 416 betrifft eine Vorrichtung zum pneumatischen Ausbringen von Dünger in freier Dosierung. Diesem Gerät kann kein Zellenrad und keine Abstreifervorrichtung, die mit dem Zellenrad zusammenwirkt, entnommen werden und betrifft somit nicht eine volumetrische Dosierung. Die Arbeitsweise eines derartigen Gerätes ist viel zu ungenau, wenn es um das Ausbringen von Granulaten hoher Konzentration, z.B. von Chemikalien geht.

Vorliegender Erfindung liegt das Problem zugrunde, eine extrem hohe Genauigkeit in der Dosierung des auszubringenden Gutes zu erreichen.

Aufgabe der Erfindung ist es, eine Vorrichtung der gattungsgemäßen Art so weiterzubilden, daß an der Stelle zwischen Innenumfang des Behälters und Außenumfang des Zellenrades, an der das granulatförmige Material in das Zellenrad eingeführt wird, eine volumetrische Dosierung der Streugutabgabe auf einfache und exakte Weise erreicht, gleichzeitig die Beschädigung der Gehäuseinnenwand durch Granulat mit Sicherheit vermieden, und damit eine kontinuierliche Dosierung des Granulats über unbegrenzte Zeit aufrecht erhalten wird und daß das granulatförmige Material nach dieser genauen Dosierung exakt, schnell und gezielt in Einzelkanälen ausgebracht werden kann.

Gemäß der Erfindung wird dies mit den Merkmalen des Kennzeichens des Anspruches 1 erreicht. Weitere Ausgestaltungen der Erfindung sind Gegenstand der Unteransprüche.

Die Kombination aus einem Abstreifer für die exakte Dosierung, einer Druckluftführung für das einwandfreie, schnelle und gezielte Ausbringen und geschlossenen Einzelkanälen für das exakte Zuordnen des ausgebrachten Granulats zwischen Kanälen und Zellenradreihen ergibt eine Vorrichtung, mit der auf optimale Weise die der Erfindung zugrundeliegende Aufgabe gelöst wird. Hierbei wirkt der Abstreifer als Meßlatte für die volumetrische Dosierung; der Verschleiß des Abstreifers läßt sich dabei immer wieder durch einfaches Nachstellen kompensieren und der Verschleißspalt auf besonders einfache Weise exakt dimensionieren und begrenzen. Der Verschleiß bei derartigen Vorrichtungen ist ein entscheidendes Kriterium, da bei vergleichbaren bekannten Vorrichtungen entweder das Zellenrad oder das Gehäuse bei hartem, auszubringendem Material beschädigt und zerstört wird, während im Falle der Erfindung die Abstreifervorrichtung mit dem Granulat in Kontakt kommt und nachgestellt bzw. ausgewechselt werden kann. Diese Abstreifervorrichtung ist aus besonders widerstandsfestem Material hergestellt. An der Übergabestelle des Materials in Umfangsrichtung des Zellenrades sind den Aussparungen des Zellenrades zugeordnete Freiräume in Form von Vertiefungen, Kanälen, Schächten oder dergl. vorgesehen, in denen das Granulat aus dem Gehäuse bzw. aus dem Zellenrad übernommen und in die Abgabeleitungen übergeführt wird. Sie sind mit Ausnahme der Übergabestelle geschlossen und es wird Druckluft in Bewegungsrichtung des Granulats geblasen, um eine gezielte Abführung des Granulats zu erreichen. Da die Einzelkanäle den einzelnen Zellenreihen des Zellenrades entsprechend angeordnet und zugeordnet sind, wird dadurch verhindert, daß Granulat aus der einen Reihe in eine andere Reihe gelangen kann, so daß eine exakte Zuordnung zwischen Zellenradreihen und Kanälen gewährleistet ist. Ein Kanal kann dabei auch zwei oder mehr nebeneinanderliegende Zellenreihen überdecken. Mit diesen kanalförmigen, das Zellenrad teilweise umschließenden Gehäuseausbildungen wird eine Gleitbahn für das Granulat in Form einer schiefen Ebene sowie ein Windkanal zum Beschleunigen des Granulats aufgrund des bei verringertem Durchströmquerschnitt entstehenden Venturi-Effektes erzielt.

Dadurch, daß an der Zuführstelle des Granulats zum Zellenrad ausschließlich die Abstreifervorrichtung mit dem Granulat in Kontakt kommt und in einstellbarem Abstand zur Umfangsfläche des Zellenrades angeordnet ist, wird in die jeweiligen Zellen des Zellenrades eine genau definierte, dosierte Menge an Granulat eingeführt und in den Boden abgeleitet. Das überschüssige Granulat wird bei Drehung des Zellenrades von der Abstreifervorrichtung zurückgehalten und zusammen mit dem aus dem Trichter nachrieselnden Granulat in die nachfolgenden Zellen des Zellenrades eingefüllt. Die mechanischen Beanspruchungen, die beim Abstreifen des Granulats auf die zugeordnete Behälterwand ausgeübt werden, werden damit ausschließlich von der Abstreifervorrichtung aufgenommen, die aus besonders widerstandsfestem Material besteht und die bei Abnutzung auf einfache Weise auswechselbar ist.

Die dem Zellenrad zugewandte Gehäusefläche weist zumindest an der Übergabestelle des Granulats in Umfangsrichtung des Zellenrades verlaufende, den Granulat aufnehmenden Aussparungen des Zellenrades zugeordnete Freiräume in Form von Vertiefungen, Kanälen oder Schächten auf, in denen das Granulat aus dem Gehäuse übernommen und in die Abgabeleitungen übergeführt wird; sie sind mit Ausnahme der Übergabestelle geschlossen, durch sie wird Druckluft in Bewegungsrichtung des Granulats geblasen.

Die eizelnen rohrförmigen Elemente bilden in ihrer Gesamtheit das das Zellenrad umschließende Gehäuse. Stattdessen kann auch ein durchgehendes, in einzelne Kammern unterteiltes Gehäuseteil vorgesehen werden, das ebenso wie die Einzelkanäle aus Metallblech oder aus Kunststoff besteht. Es kann jedoch auch ein massives, das Zellenrad umschließendes Gehäuse vorgesehen sein, in welches Kanäle eingearbeitet, z.B. eingefräst sind, und entsprechende Luftführungskanäle von der Gehäuseaußenseite nach innen zu den Kanälen gebohrt sind, um die Abführung der Granulate durch Druckluft zu beschleunigen. Des weiteren kann das Gehäuse als Ganzes z.B. aus Kunststoff gegossen oder in Form von scheibenförmigen Teilen hergestellt sein, wobei die einzelnen Scheiben mittels Spannschrauben miteinander verschraubt werden.

Mit der Erfindung wird erreicht, daß die von dem Zellenrad abgegebene Granulate nicht zermahlen bzw. zerrieben werden, daß diese Granulate einwandfrei dosiert, gesteuert, geführt und abgegeben werden, und daß durch die in die Führungsschächte eingeblasene Luft die Granulatbewegung mit erhöhter Geschwindigkeit erfolgt. Damit entfällt auch das Problem der Beschädigung des Gehäuses, so daß damit ein einwandfreier, kontinuierlicher Langzeitbetrieb sichergestellt ist. Die Genauigkeit der Dosierung ist um ein Vielfaches höher als bei Dosiergeräten bekannter, vergleichbarer Art.

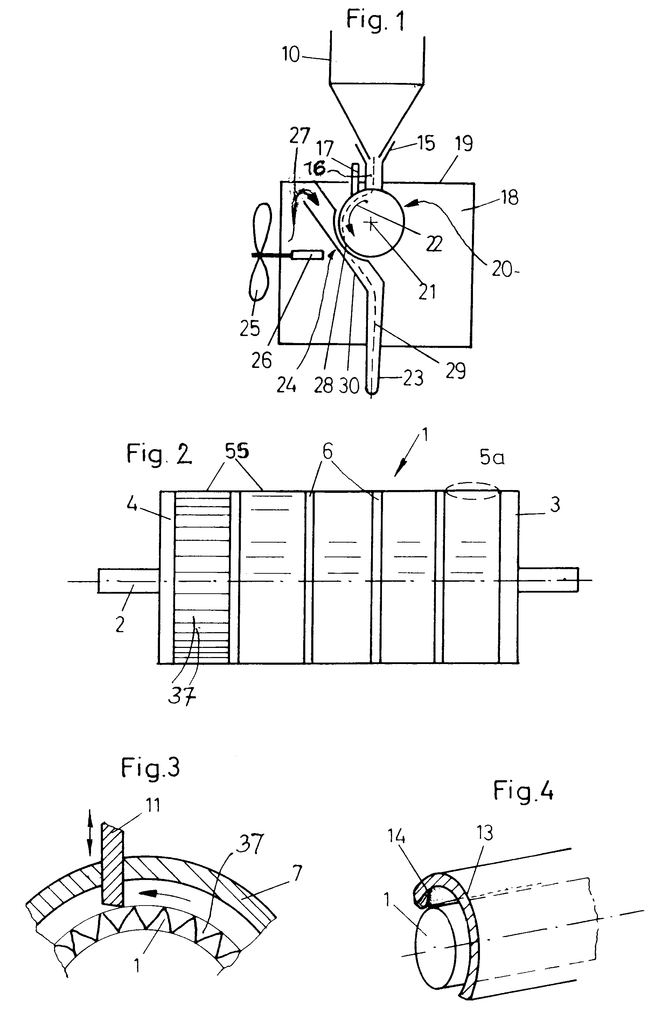

Nachstehend wird die Erfindung in Verbindung mit der Zeichnung anhand von Ausführungsbeispielen erläutert. Es zeigt:
- Fig. 1: eine Prinzipdarstellung der Erfindung,
- Fig. 2: eine Aufsicht auf ein Zellenrad herkömmlicher Art,
- Fig. 3: die Darstellung einer einem Zellenrad zugeordneten Abräumleiste nach Fig. 2,
- Fig. 4: eine andere Ausführungsform einer Abräumleiste,
- Fig. 5: eine Darstellung eines Teiles der Ausführungsform nach Fig. 1 in perspektivischer Ansicht,
- Fig. 6: eine Aufsicht auf die Darstellung nach Fig. 5,
- Fig. 7: eine detaillierte, spezielle Ausführungsform der Vorrichtung nach Fig. 1 in Seiten-Schnittansicht,
- Fig. 8: die Vorrichtung nach Fig. 7 in Vorderansicht,
- Fig. 9: die Vorrichtung nach Fig. 7 und 8 in Aufsicht,
- Fig. 10: eine weitere abgeänderte Ausführungsform der Erfindung in Schnittansicht,
- Fig. 11: eine Seitenansicht einer abgeänderten Ausführungsform der Erfindung im Schnitt, und
- Fig. 12: eine schematische Schnittansicht durch die Vorrichtung nach Fig. 11,
Ein zylinderisches Zellenrad 1 nach Fig. 2 mit Antriebswelle 2 und Stirnseiten 3, 4 besteht aus zylindrischen Zellenkörpern 5 mit Distanzscheiben 6. Die Zellenkörper 5 sind am Umfang zahnradförmig mit Vertiefungen 37 ausgebildet, die Zellen zur Granulataufnahme darstellen. Jedem Zellenkörper 5 ist eine Öffnung 8 im Gehäuse 7 zugeordnet, die an eine Abgabeleitung 9, z.B. einen Schlauch, angeschlossen ist. Die Wandbegrenzungen der Zellenkörper 5 sind vorzugsweise eben, können aber auch gekrümmt (5a) sein. Zwischen Zellenrad 1 und rohrförmigem Gehäuse ist ein Spalt a vorgesehen. Hartes Granulat, das über die Umfangsfläche des Zellenrades in den Spalt hinein soweit vorsteht, daß es mit der Innenwand des Gehäuses 7 in Kontakt kommt, beschädigt das Gehäuse an dieser Auftreffstelle; empfindliches Granulat hingegen wird zerquetscht.

Am trichterförmigen Granulatbehälter 10 ist im untersten Bereich an der Austrittsöffnung 8 eine Abstreifervorrichtung 11, z.B. eine Abräumleiste vorgesehen, die in den Spalt a zwischen Behälter 7 und Zellenrad 1 vorsteht; sie ist mit dem Gehäuse 7 oder mit dem Behälter 10 gegen die Umfangsfläche des Zellenrades 1 stufenlos verstellbar befestigt, z.B. über Schrauben-Langloch-Verbindung, Zahngetriebe mit Feineinstellung oder dergl.; die Abräumleiste 11 kann sich z.B. radial unter Federvorspannung bis zum Umfang des Zellenrades 1 erstrecken, so daß überstehendes Granulatmaterial abgestreift bzw. zurückgehalten wird. Die Abräumleiste 11 besteht für Hartgranulat aus Hartmaterial, z.B. Hartmetall, gehärtetem Metall oder Hartkeramik, so daß die Abräumleiste das harte Granulatmaterial bricht und selbst praktisch nicht verschleißt. Für Saatgutgranulat ist die Abräumleiste elastisch nachgiebig ausgebildet, z.B. aus Gummi, sie wirkt als Abstreiflippe, die aus der Zelle vorstehendes Saatgut abstreift.

Eine Variante einer derartigen Abräumleiste ist z.B. in Fig. 3 in Form eines nasenförmigen Ansatzes 14 ausgebildet, der mit einem am Gehäuse befestigten Blech 13 verbunden oder angeformt ist und der durchgehend über die volle Länge des Zellenrades oder nur im Bereich der Umfangsöffnungen der Vertiefungen des Zellenrades ausgebildet ist.

Zellenrad 1 und rohrförmiger Behälter 7 sind konzentrisch oder wahlweise exzentrisch zueinander angeordnet, wobei die Abräumleiste 11 vorzugsweise an der Stelle kleinsten Spaltes zwischen 1 und 7 angeordnet ist.

Die Abräumleiste 11 ist entweder durchgehend oder aus Einzelabschnitten bestehend ausgebildet und kann im Winkel zur vertikalen Ebene einstellbar sein. Das dem Zellenrad 1 zugewandte Ende der Abräumleiste 11 kann quaderförmig, keilförmig, gerundet oder dergl. ausgebildet sein.

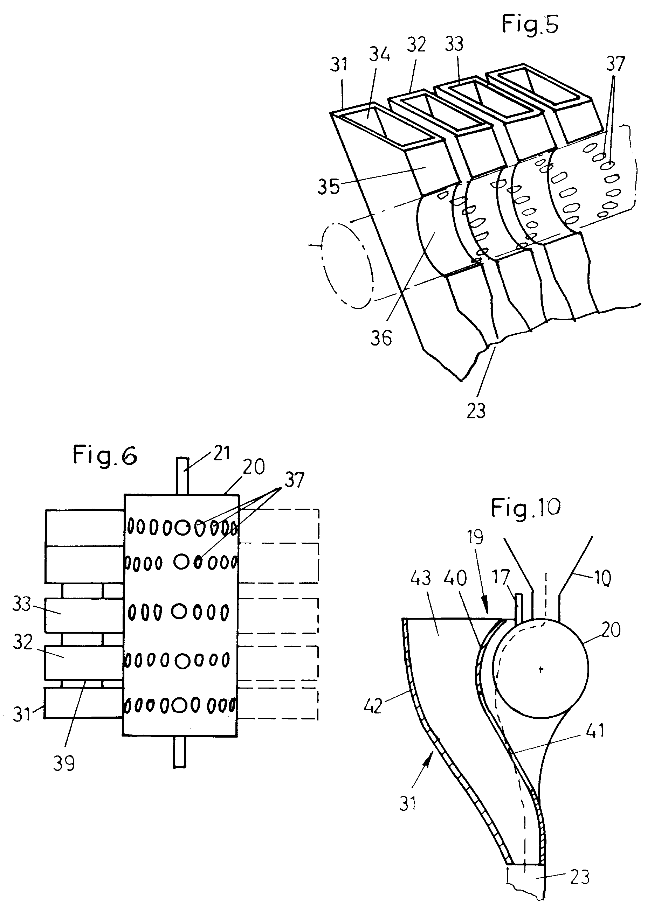

Bei der Ausführungsform nach Fig. 4 - 6 ist der Granulatbehälter mit 10, der Zuführtrichter mit 15 bezeichnet. Die Dosierung des Granulats erfolgt über die Abräumleiste 17, die z. B. an der Deckwand 19 des Gehäuses 18 oder am Trichter 15 verstellbar bei 16 befestigt ist. Mit 21 ist die Drehachse, mit 22 die Drehrichtung des Zellenrades 20 bezeichnet. 24 bezeichnet einen Freiraum bzw. Aussparungen im Gehäuse 18, die Granulat in die Abgabeleitungen 23 so abgeben, daß das Granulat im Freiraum 24 keinem Zwangsabrieb ausgesetzt ist, sondern sich ungehindert in die Abgabeleitungen 23 zum Ausbringen des Granulats bewegen kann. Das Gehäuse 18 umschließt an dieser Stelle das Zellenrad 20 teilweise, damit Granulat nicht austreten kann und Granulate verschiedener Reihen von Vertiefungen 37 des Zellenrades nicht miteinander in Verbindung kommen, so daß eine einwandfreie und exakte Trennung und Dosierung erreicht wird. Ein im Gehäuse 18 bei 26 angeordnetes Gebläse 25 fördert Blasluft 27 in den Freiraum 24, z.B. durch den Freiraum 24 bildende schachtförmige Kanäle 31, 32, 33; an der Übergabestelle des Granulats vom Zellenrad in die Kanäle erfolgt eine Verengung des Querschnitts des Freiraumes, so daß durch Venturiwirkung ein verbesserter Blaseffekt das Granulat mit erhöhter Geschwindigkeit abführt. Das Granulat wird über eine Schräge 30 abgeführt.

Die den Freiraum zur Aufnahme, Übergabe und Abgabe des Granulats an die Leitungen 23 bildenden Kanäle 31... sind geschlossen, jedoch an der Oberseite 34 offen; die dem Zellenrad 20 zugewandte Wand 35 ist im Bereich 36, in welchem die Schächte 31 das Zellenrad 20 umschließen, offen, damit Granulat aus den Vertiefungen 37 des Zellenrades mit Hilfe des Blasstromes 27 den schrägen Schacht nach abwärts entlang der Rückwand 31 in die Leitung 23 gefördert wird. An der Granulatübergabestelle 28 ist der Schachtdurchmesser verringert; die Öffnung 36 wird durch die Oberfläche des Zellenrades 20 begrenzt; Gehäuse 18, Schächte 31, etc. bestehen aus Metall- oder Kunststoffplatten bzw. Metall- oder Kunststoffgußteilen. Die Schächte 31, 32, 33 liegen seitlich unmittelbar nebeneinander oder sind durch Beilagen 39 getrennt. Die Vertiefungen 37 des Zellenrades bilden in Umfangsrichtung und in Achsrichtung des Zellenrades im gleichen Abstand voneinander parallele Reihen; ein Schacht ist jeweils einer oder mehreren Reihen zugeordnet. Die Anordnung nach den Figuren 4 - 6 kann auch spiegelbildlich zur Längsachse des Zellenrades 20 als Doppelanordnung 31' zur Richtungsumkehr des Zellenrades ergänzt werden.

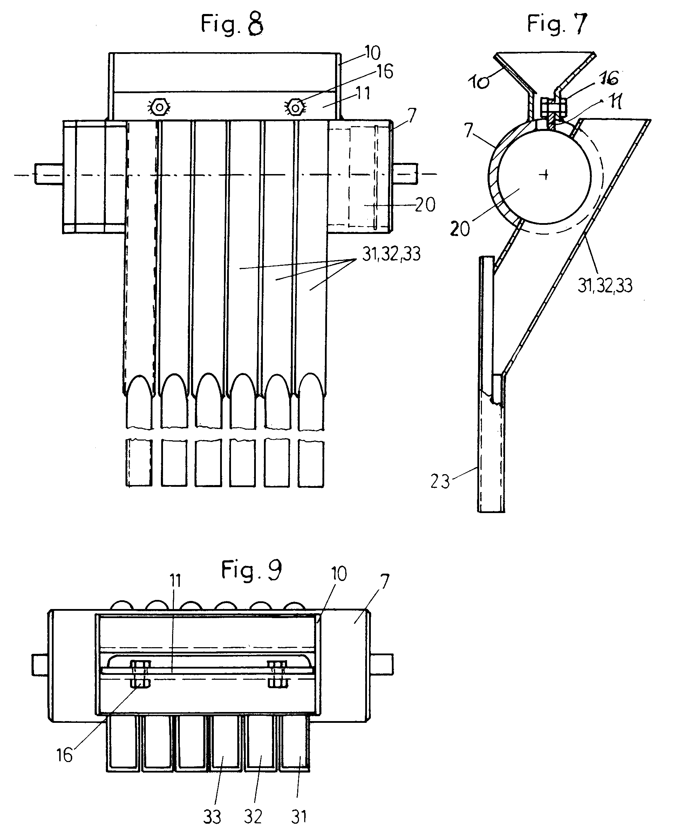

Die Figuren 7 - 9 zeigen eine detaillierte, praktische Ausführungsform der Erfindung entsprechend Fig. 1. Die Einzelteile bestehen aus Metallblech und sind miteinander verschweißt.

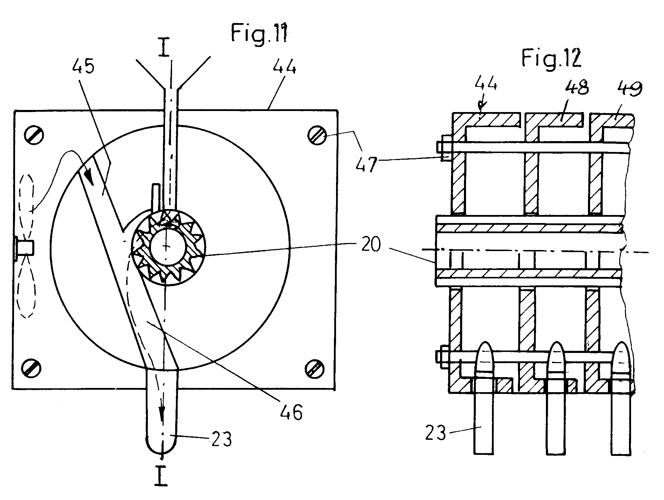

Bei der Ausführung nach Fig. 10 ist der Freiraum für die Granulatabgabe so ausgebildet, daß das das Zellenrad 20 umgebende Gehäuse 19 eine durchgehende, durch Trennwände parallel zur Zeichenebene in Einzelkanäle unterteilte Schachtanordnung 31 aufweist, deren dem Zellenrad 20 zugewandte Wandung 40 den Vertiefungen 37 des Zellenrades zugeordnete Öffnungen 41 besitzt. Die Wand 40 bildet mit der gegenüberliegenden Wand 42 der Schachtanordnung 31 Luftführungskanäle 43, die in die Abgabeleitung 23 übergehen. Das Gehäuse 19 mit Schachtkörper 31 ist ein Kunststoff-Spritzgußteil, dessen geschwungene Form dem Zellenrad angepaßt ist.

Die Figuren 11 und 12 zeigen eine Alternativlösung mit einem massiven Gehäuse 44 mit Luftführungskanälen 45, die z.B. gebohrt oder gegossen sind; Aussparungen im Gehäuse 44 bilden den Freiraum für die Granulatabführung vom Zellenrad 20 zu den Abgabeleitungen 23. Das Gehäuse 44 ist ein Kunststoff- oder Metallgießteil oder besteht aus Einzelscheiben 48, 49, die flächig aneinandergesetzt das Gehäuse 44 bilden und durch Spannschrauben 47 verbunden sind.

## Patentansprüche

1. Vorrichtung zum vereinzelten Ausbringen und exakten Dosieren von granulatförmigem Einzelkornmaterial aus Granulatstreuern, bestehend aus einem Zellenrad (1; 20), einem das Zellenrad im Abstand umschließenden Gehäuse (7; 8; 15; 18), einem trichterförmigen Behälter (10) über dem Gehäuse, der das Granulat über eine Gehäuseöffnung in die Zellen des Zellenrades (1; 20), einführen kann, einer unteren Gehäuseöffnung, durch die Granulat aus dem Zellenrad nach unten über mit den Abgabeöffnungen des Gehäuses verbundene Abgabeleitungen (9, 23) abgegeben werden kann, und mit einer am Gehäuse an der Übergabestelle zwischen Trichter und Zellenrad befestigten Abstreifervorrichtung (11; 17),
**gekennzeichnet durch** die Kombination folgender Merkmale:
a) die Abstreifervorrichtung (11; 17) ist in radialer Richtung auf das Zellenrad zu und von diesem weg sowie wahlweise zusätzlich im Winkel zur radialen Erstreckung nachstellbar,
b) die das Zellenrad (20) umschließende Gehäusefläche weist zumindest im Bereich zwischen der Eintrittsstelle und der Austrittsstelle des Granulats im Gehäuse (18) in Umfangsrichtung des Zellenrades verlaufende, den das Granulat aufnehmenden Aussparungen (37) des Zellenrades (20) zugeordnete Freiräume (24; 36; 41; 46; 51), z.B. Vertiefungen oder Rillen auf, in denen das Granulat aus dem Zellenrad (20) übernommen und in die Verteilerleitungen (23) übergeführt werden kann,
c) dem Gehäuse (18) ist ein Gebläse (25) zugeordnet und die Freiräume (24; 36; 41; 46; 51) zur Führung des Granulats sind zumindest ab der Übergabestelle des Granulats vom Zellenrad (20) in die Abgabeleitungen (23) gleichzeitig Luftführungen (27; 43; 46; 51) für den vom Gebläse (25) erzwungenen Luftstrom, der zur beschleunigten Weiterleitung des Granulats in die Abgabeleitungen (23) geblasen werden kann, und
d) die Freiräume (24) sind als einzelne, aneinandergereihte und voneinander getrennte Schächte bzw. Leitkanäle (31, 32, 33) ausgebildet.

2. Vorrichtung nach Anspruch 1, dadurch gekennzeichnet, daß die Luftführungen (27; 43; 46; 51) unmittelbar am Zellenrad (20) bzw. an der Übergabestelle des Granulats vom Zellenrad (20) in das Gehäuse (18) eine Verengung und damit eine Stelle erhöhter Strömungsgeschwindigkeit aufweisen.

3. Vorrichtung nach Anspruch 1 oder 2, dadurch gekennzeichnet, daß jeder Schacht bzw. Leitkanal (31, 32, 33) an der Übergabestelle des Granulats aus dem Zellenrad (20) in den Schacht eine Anpassung (36) besitzt, daß jeder Schacht einer Reihe von in Umfangsrichtung auf dem Zellenrad (20) ausgebildeten Vertiefungen (37) zugeordnet ist und daß jeder einzelne Schacht im unteren Bereich in einen Freiraum (24) übergeht.

4. Vorrichtung nach Anspruch 2 oder 3, dadurch gekennzeichnet, daß die einzelnen Schächte (31, 32, 33) aus Metallblech oder Kunststoffplatten hergestellt sind und Rechteckquerschnitt haben, daß die Schächte seitlich vollflächig aneinander anliegen, und daß die Seitenflächen der Umfangsform des Zellenrades (20) entsprechend teilkreisförmig ausgeschnitten sind.

5. Vorrichtung nach Anspruch 1 oder 2, dadurch gekennzeichnet, daß die Summe der Einzelschächte als Gußteil innerhalb des Gehäuses (18) mit Trennwänden ausgebildet ist, die im Abstand der Umfangsreihen von Vertiefungen (37) des Zellenrades (20) voneinander versetzt sind, daß in der dem Zellenrad (20) zugewandten Wandung (40) des Gußteiles Ausnehmungen (41) für den Granulatdurchgang vorgesehen sind, und daß zwischen Wandung (40) und Oberfläche des Zellenrades (20) Rinnen ausgebildet sind, deren Tiefe größer ist als dem Durchmesser des Granulats entspricht.

6. Vorrichtung nach Anspruch 1, dadurch gekennzeichnet, daß die Abstreifervorrichtung (13, 14) ein mit dem Gehäuse (7) befestigtes und dessen Form angepaßtes, das Zellenrad (1) teilweise umschließendes Bauteil (13) mit Ansatz (14) ist, der eine Abräumleiste darstellt.

## Claims

1. Apparatus for the individualized discharge and exact dosing of granular single-grain material from granule sprinklers, comprising a bucket wheel (1, 20), a casing (7, 8, 15, 18) surrounding in spaced manner said bucket wheel, a hopper-like container (10) above the casing and which can feed the granules via a casing opening into the buckets of the bucket wheel (1, 20), a lower casing opening through which the granules can be delivered downwards out of the bucket wheel via delivery lines (9, 23) connected to delivery openings of the casing, and with a stripping means (11, 17) fixed to the casing at the transfer point between the hopper and the bucket wheel,
characterized by the combination of the following features:
a) the stripping means (11, 17) is radially adjustable towards and away from the bucket wheel and, as desired, additionally at an angle to the radial extension,
b) the casing surface surrounding the bucket wheel (20) has, at least in the area between the entry point and the exit point of the granules in the casing (18), free spaces (24, 36, 41, 46, 51) e.g. depressions or grooves, associated with recesses (37) of the bucket wheel (20) receiving the granules and directed in the circumferential direction of the bucket wheel and which receive the granules from said bucket wheel (20) and transfer same into the distributing lines (23),
c) with the casing (18) is associated a blower (25) and the free spaces (24, 36, 41, 46, 51) for guiding the granules, at least from the transfer point of the granules from the bucket wheel (20) into the delivery lines (23), simultaneously form air guides (27, 43, 46, 51) for the air flow forced by the blower (25) and which can be blown for accelerated passing on of the granules into the delivery lines (23) and
d) the free spaces (24) are constructed as individual, series-arranged and separated shafts or ducts (31, 32, 33).

2. Apparatus according to claim 1, characterized in that the air guides (27, 43, 46, 51) directly at the bucket wheel (20) or at the transfer point of the granules from the bucket wheel (20) into the casing (18), have a constriction and therefore an increased flow rate point.

3. Apparatus according to claim 1 or 2, characterized in that each shaft or duct (31, 32, 33) at the transfer point of the granules from the bucket wheel (20) into the shaft has a fitting (36), that with each shaft is associated a plurality of depressions (37) formed circumferentially on the bucket wheel and that each individual shaft in the lower region passes into a free space (24).

4. Apparatus according to claim 2 or 3, characterized in that the individual shafts (31, 32, 33) are made from sheet metal or plastics plates and have a rectangular cross-section, that the shafts laterally engage on one another in full-surface manner and that the lateral faces of the circumferential shape of the bucket wheel (20) are correspondingly cut out in pitch circular manner.

5. Apparatus according to claim 1 or 2, characterized in that the sum of the individual shafts is constructed as a casting within the casing (18) with partitions, which are reciprocally displaced with the spacing of the circumferential rows of depressions (37) of the bucket wheel (20), that in the wall (40) of the casting facing the bucket wheel (20) are provided recesses (41) for the passage of granules and that between the wall (40) and the surface of the bucket wheel (20) channels are formed, whose depth exceeds the diameter of the granules.

6. Apparatus according to claim 1, characterized in that the stripping means (13, 14) is a component (13) with a shoulder (14) partly surrounding the bucket wheel (1), fixed to the casing (7) and adapted to the shape thereof and which constitutes a clearing ledge.

## Revendications

1. Dispositif pour l'extraction individuelle et le dosage exact d'une matière monograine en granulés provenant d'épandeurs de granulés, comprenant une roue (1 ; 20) à cellules, un boîter (7 ; 8 ; 15 ; 18) entourant la roue à cellules et espacé de celle-ci, un conteneur (10) en entonnoir au-dessus du boîtier qui peut introduire les granulés par une ouverture du boîtier dans les cellules de la roue (1 ; 20) à cellules, une ouverture de boîtier inférieure à travers laquelle des granulés peuvent être déversés vers le bas par des conduits (9 , 23) de déversement reliés aux ouvertures de déversement du boîtier, et comprenant un dispositif racleur (11 ; 17) fixé au boîter au point de déversement entre l'entonnoir et la roue à cellules,
caractérisé en ce que :
a) le dispositif racleur (11 ; 17) est réglable dans la direction radiale vers la roue à cellules et en s'éloignant de celle-ci ainsi que facultativement, de façon supplémentaire, suivant un angle par rapport à la direction radiale,
b) la surface du boîtier entourant la roue (20) à cellules présente des espaces libres (24 ; 26 ;41 ; 46 ; 51) disposés au niveau des évidements (37) de la roue (20) à cellules recevant les granulés, s'étendant au moins dans la région entre le point d'entrée et le point de sortie des granulés dans le boîtier (18) dans la direction circonférentielle de la roue à cellules, par exemple des cavités ou des gorges, dans lesquelles les granulés peuvent être pris à partir de la roue (20) à cellules et transportés dans les conduits (23) de distribution,
c) le boîtier est muni d'une soufflante (25) et les espaces libres (24 ; 36 ; 41 ; 46 ; 51) pour le transport des granulés sont au moins à partir du point de déversement des granulés de la roue (20) à cellules dans les conduits (23) de déversement en même temps des conduits (27 ; 43 ; 46 ; 51) d'air pour le flux d'air forcé provenant de la soufflante (25), qui peut être soufflé pour l'acheminement ultérieur accéléré des granulés dans les conduits (23) de déversement, et en ce que
d) les espaces libres (24) sont réalisés sous la forme de conduites ou de canaux (31, 32, 33) placés en série et séparés les uns des autres.

2. Dispositif selon la revendication 1, caractérisé en ce que les conduits (27 ; 43 ; 46 ; 51) d'air présentent un rétrécissement et donc un point de vitesse de courant plus élevée directement sur la roue (20) à cellules ou au point de déversement des granulés de la roue (20) à cellules dans le boîtier (18).

3. Dispositif selon la revendication 1 ou 2, caractérisé en ce que chaque conduite ou canal (31, 32, 33) possède une partie (36) d'adaptation au point de déversement des granulés de la roue (20) à cellules dans la conduite, en ce que chaque conduite est munie d'une série de cavités (37) disposées sur la roue (20) à cellules dans la direction circonférentielle et en ce que chaque conduite individuelle et en ce que chaque conduite individuelle passe dans la région inférieure dans un espace libre (24).

4. Dispositif selon la revendication 2 ou 3, caractérisé en ce que les conduites (31, 32, 33) individuelles sont réalisées en tôle métallique ou en plaques de plastique et présentent une section transversale rectangulaire, en ce que les conduites sont disposées les unes contre les autres latéralement sur toute leur surface, et en ce que les surfaces latérales de la forme circonférentielle de la roue (20) à cellules sont découpées en forme de cercle divisé de façon correspondante.

5. Dispositif selon la revendication 1 ou 2, caractérisé en ce que l'ensemble des conduites individuelles est conçu en tant que pièce moulée à l'intérieur du boîtier (18) munie de parois séparatrices qui sont décalées les unes par rapport aux autres à distance des séries circonférentielles de cavités (37) de la roue (20) à cellules, en ce que des évidements (41) sont prévus dans la paroi (40) de la pièce moulée tournée vers la roue (20) à cellules pour le passage des granulés, et en ce que des conduits sont formés entre la paroi (40) et la surface de la roue (20) à cellules, dont la profondeur est plus importante que celle correspondant au diamètre des granulés.

6. Dispositif selon la revendication 1, caractérisé en ce que le dispositif racleur (13, 14) est un élément de construction (13) avec une pièce ajoutée (14) fixé au boîtier (7) et adapté à sa forme entourant partiellement la roue (1) à cellules, qui constitue un rebord de déblaiement.
